# EUROPÄISCHE PATENTSCHRIFT

(11) **EP 3 728 005 B1**
(45) Veröffentlichungstag und Bekanntmachung des Hinweises auf die Patenterteilung: **07.09.2022**
(21) Anmeldenummer: 18833601.0
(22) Anmeldetag: 07.12.2018
(51) Int. Cl.: B62D 65/02, B62D 65/18

(54) **WERKSTÜCKAUFNAHMEVORRICHTUNG ZUM FÖRDERN VON WERKSTÜCKEN UND FÖRDERVORRICHTUNG MIT SOLCHER WERKSTÜCKAUFNAHMEVORRICHTUNG**
WORKPIECE HOLDING DEVICE FOR CONVEYING WORKPIECES AND CONVEYING DEVICE HAVING A WORKPIECE HOLDING DEVICE OF THIS TYPE
DISPOSITIF DE RÉCEPTION DE PIÈCES SERVANT À CONVOYER DES PIÈCES ET DISPOSITIF DE CONVOYAGE COMPRENANT UN DISPOSITIF DE RÉCEPTION DE PIÈCES DE CE TYPE

(30) Priorität: 19.12.2017 DE 102017223236
(43) Veröffentlichungstag der Anmeldung: 28.10.2020
(73) Patentinhaber: Dürr Systems AG, 74321 Bietigheim-Bissingen (DE)
(72) Erfinder: FEDERMANN, Andreas, 70563 Stuttgart (DE); LAUER, Michael, 74321 Bietigheim/Bissingen (DE)
(74) Vertreter: Page, White & Farrer Germany LLP
(86) Internationale Anmeldenummer: PCT/DE2018/101003
(87) Internationale Veröffentlichungsnummer: WO 2019/120377

(56) Entgegenhaltungen:
- EP-A1- 2 767 461
- DE-A1-102010 030 468
- DE-A1-102014 219 764
- US-A1- 2012 146 274

## Beschreibung

### GEBIET DER ERFINDUNG

Die vorliegende Erfindung betrifft eine Werkstückaufnahmevorrichtung zum Fördern von Werkstücken, insbesondere zum Fördern von Fahrzeugkarosserien, und eine Fördervorrichtung mit einer solchen Werkstückaufnahmevorrichtung.

### TECHNISCHER HINTERGRUND

Werkstückaufnahmevorrichtungen zum Fördern von Fahrzeugkarosserien auf einem Untergrund oder einer Transportvorrichtung werden häufig als Skids bezeichnet. Sie weisen in der Regel eine Basis, die auf einem Untergrund oder entlang einer Transportvorrichtung bewegt werden kann, und einen Werkstückträger zum Tragen der Fahrzeugkarosserie auf.

US 2012/146274 A1 offenbart eine Fördervorrichtung für Fahrzeugkarosserien mit einer Werkstückaufnahmevorrichtung mit mehreren Klemmstücken zum Tragen einer Fahrzeugkarosserie, wobei die Positionen der Klemmstücke mittels mehrerer Bewegungseinheiten und Hubeinheiten an unterschiedliche Fahrzeugkarosserien von verschiedenen Fahrzeugtypen angepasst werden können. EP 2 767 461 A1 beschreibt eine Transportvorrichtung für eine Fahrzeugmontageeinrichtung, die ein Grundelement aufweist, auf dem zwei Hubvorrichtungen quer zur Förderrichtung montiert sind, auf denen jeweils ein Trägerelement zum Tragen eines Fahrzeugs drehbar gelagert ist, um eine nahezu uneingeschränkte Zugänglichkeit zu einer Fahrzeugkarosserie und eine Schrägstellung der Fahrzeugkarosserie quer zur Längsrichtung zu ermöglichen. DE 10 2014 219764 A1 beschreibt eine Fördervorrichtung zum einfachen und zuverlässigen Fördern von insbesondere zu trocknenden Fahrzeugkarosserien, wobei die Fördervorrichtung eine Schrägfördervorrichtung umfasst, auf der die Fahrzeugkarosserie auf einer Werkstückaufnahme in einer schräg zur Ausgangsausrichtung angeordneten Schrägausrichtung längs der Förderrichtung der Fördervorrichtung förderbar ist. DE 10 2010 030 468 A1 beschreibt eine Fertigungsanlage für zumindest aus einer Bodengruppe bestehende Fahrzeug-Rohkarosserien, die an einer Stelle zwei Dreiachshalterungen aufweist, die in Referenzöffnungen des jeweiligen Karosseriemodells eingreifen, um die Karosserie an der vorgegebenen Bearbeitungsposition anzuheben oder zu neigen.

### ZUSAMMENFASSUNG DER ERFINDUNG

Der Erfindung liegt die Aufgabe zugrunde, ein verbessertes Fördersystem zum Fördern von Werkstücken zu schaffen, mit welchem die zu behandelnden Werkstücke auf einfache Weise bedarfsgerecht positioniert werden können.

Diese Aufgabe wird gelöst durch die Lehre der unabhängigen Ansprüche. Einige vorteilhafte Ausgestaltungen der Erfindung sind Gegenstand der abhängigen Ansprüche.

Die erfindungsgemäße Werkstückaufnahmevorrichtung zum Fördern von Werkstücken weist eine Basis, die ausgestaltet ist, um auf einem Untergrund oder entlang einer Transportvorrichtung einer Fördervorrichtung in einer Förderrichtung bewegt zu werden, und einen Werkstückträger zum Tragen wenigstens eines Werkstücks, der auf der Basis montiert ist, auf. Gemäß der Erfindung ist zudem wenigstens ein Hubmechanismus vorgesehen, um einen in Förderrichtung hinteren Bereich und/ oder einen in Förderrichtung vorderen Bereich des Werkstückträgers relativ zur Basis anzuheben oder abzusenken. Außerdem weist der wenigstens eine Hubmechanismus ein Kopplungselement auf, das mit einer externen Kulisse der Transportvorrichtung koppelbar ist, um den wenigstens einen Hubmechanismus anzutreiben.

Gemäß der Erfindung können eine Höhenverstellung des Werkstücks und/oder eine Ausrichtung (insbesondere Schrägstellung) des Werkstücks durch die Werkstückaufnahmevorrichtung selbst erreicht werden. Die anderen Komponenten der Fördervorrichtung und der Werkstückbehandlungsanlage müssen daher nicht oder nur geringfügig modifiziert werden. Außerdem können die Höhenverstellung und die Ausrichtung des Werkstücks auf diese Weise nicht nur im getakteten Betrieb, sondern auch im kontinuierlichen Betrieb durchgeführt werden. Beispielsweise können durch eine schräge Ausrichtung des Werkstücks die Zugänglichkeit zu bestimmten Bereichen des Werkstücks verbessert oder ein Abfließen von Flüssigkeiten aus / von dem Werkstück ermöglicht werden. Ebenso können durch die variable Höhenpositionierung die Arbeitsbedingungen verbessert werden, da die Arbeiten an dem Werkstück jeweils in idealer Höhe durchgeführt werden können. Die Kulisse kann den Hubmechanismus der Werkstückaufnahmevorrichtung automatisch aktivieren, wenn die Werkstückaufnahmevorrichtung im Bereich der Kulisse in Förderrichtung bewegt wird.

Die erfindungsgemäße Werkstückaufnahmevorrichtung eignet sich insbesondere zur Verwendung in Werkstückbehandlungsanlagen zum Behandeln und/oder Bearbeiten von Werkstücken, insbesondere von Fahrzeugkarosserien. Eine Werkstückbehandlungsanlage ist insbesondere eine Oberflächenbehandlungsanlage, eine Bearbeitungsanlage, eine Beschichtungsanlage, eine Lackieranlage, eine Trocknungsanlage oder eine Reinigungsanlage. Mit Hilfe der erfindungsgemäßen Werkstückaufnahmevorrichtung können insbesondere noch nasse und zu trocknende Werkstücke so gefördert werden, dass eine Flüssigkeit von den Werkstücken einfach abfließen kann und die Werkstücke so während ihrer Förderung effizient getrocknet werden können.

Die Werkstückaufnahmevorrichtung ist bevorzugt in der Art eines so genannten Skids ausgestaltet. Solche Skids weisen eine rahmenartige Basis mit kufenartigen Auflageelementen, die mittels Querträgern miteinander verbunden sind und die auf Schienen einer Transportvorrichtung oder mit Rädern auf einem Untergrund in Förderrichtung bewegt werden können.

Der Werkstückträger der Werkstückaufnahmevorrichtung ist ausgestaltet und dimensioniert, um ein oder mehrere Werkstücke zu tragen. Die Werkstücke können an dem Werkstückträger vorzugsweise fixiert werden.

Die Werkstückaufnahmevorrichtung der Erfindung weist einen hinteren Hubmechanismus zum Anheben oder Absenken des in Förderrichtung hinteren Bereichs des Werkstückträgers oder einen vorderen Hubmechanismus zum Anheben oder Absenken des in Förderrichtung vorderen Bereichs des Werkstückträgers oder einen hinteren Hubmechanismus zum Anheben oder Absenken des in Förderrichtung hinteren Bereichs des Werkstückträgers und einen vorderen Hubmechanismus zum Anheben oder Absenken des in Förderrichtung vorderen Bereichs des Werkstückträgers, wobei der hintere und der vordere Hubmechanismus bevorzugt unabhängig voneinander betätigt werden können, auf.

Vorzugsweise befindet sich der Werkstückträger im Ausgangszustand der Werkstückaufnahmevorrichtung in niedriger Position relativ nahe an der Basis und kann mittels des hinteren oder vorderen Hubmechanismus in eine Schrägstellung angehoben werden oder mittels des hinteren und vorderen Hubmechanismus insgesamt angehoben werden und nach Beendigung der Schrägstellphase bzw. der Anhebephase wieder abgesenkt werden. Alternativ kann sich der Werkstückträger im Ausgangszustand der Werkstückaufnahmevorrichtung in erhöhter Position mit Abstand zur Basis befinden und kann mittels des hinteren oder vorderen Hubmechanismus in eine Schrägstellung abgesenkt werden oder mittels des hinteren und vorderen Hubmechanismus insgesamt abgesenkt werden und nach Beendigung der Schrägstellphase bzw. der Absenkphase wieder angehoben werden. Ferner sind mit dem vorderen und hinteren Hubmechanismus bei Bedarf auch Kombinationen aus Schrägstellung und Anheben / Absenken möglich.

Die Schrägstellung bezieht sich auf eine Referenzebene, die durch den Untergrund und/oder die Transportvorrichtung vorgegeben ist. Dabei soll die Schrägstellung vorzugsweise erreichen, dass der Werkstückträger im Ergebnis gegenüber der Horizontalen geneigt ist. Da bei der erfindungsgemäßen Werkstückaufnahmevorrichtung der in Förderrichtung hintere oder vordere Bereich des Werkstückträgers angehoben / abgesenkt wird, erfolgt die Schrägstellung des Werkstückträgers in der Förderrichtung.

In einer Ausgestaltung der Erfindung weist die Werkstückaufnahmevorrichtung ferner wenigstens einen Steuermechanismus auf, der ausgestaltet ist, um den wenigstens einen Hubmechanismus in einer Betriebsstellung zu verriegeln, in welcher der Bereich des Werkstückträgers relativ zur Basis angehoben bzw. abgesenkt ist. Durch eine solche Verriegelung des Hubmechanismus kann die Höhenverstellung und/oder Schrägstellung des Werkstückträgers auf einfache Weise gesichert werden, ohne dass zum Beispiel der Hubmechanismus ständig durch einen Aktuator oder dergleichen angetrieben werden muss.

Bei dieser Ausgestaltung weist die Werkstückaufnahmevorrichtung vorzugsweise ferner wenigstens einen Aktuator zum Ansteuern des wenigstens einen Steuermechanismus, um den wenigstens einen Hubmechanismus zu entriegeln, auf. Alternativ kann ein solcher Aktuator auch extern an der Transportvorrichtung oder in der Werkstückbehandlungsanlage vorgesehen sein.

In einer weiteren Ausgestaltung der Erfindung weist die Werkstückaufnahmevorrichtung ferner wenigstens einen Steuermechanismus auf, der ausgestaltet ist, um eine Hubbewegung des wenigstens einen Hubmechanismus in einer den Bereich des Werkstückträgers relativ zur Basis anhebenden Richtung und/oder in einer den Bereich des Werkstückträgers relativ zur Basis absenkenden Richtung zu begrenzen. Dieser Steuermechanismus kann insbesondere in den Hubmechanismus integriert sein, am Werkstückträger vorgesehen sein und/oder an der Basis vorgesehen sein.

In einer Ausgestaltung der Erfindung weist der wenigstens eine Hubmechanismus einen Kniehebelmechanismus auf. Der Kniehebelmechanismus stellt eine einfache und zugleich hochbelastbare Ausführungsform eines Hubmechanismus dar. Außerdem können die Steuermechanismen zum Verriegeln und Begrenzen der Hubbewegung auf einfache Weise in einen solchen Kniehebelmechanismus integriert werden oder mit einem solchen Kniehebelmechanismus kombiniert werden. Der Kniehebelmechanismus ist dabei auf keine spezielle Ausführungsform beschränkt, insbesondere nicht auf die Anzahl der Hebel und der Gelenke des Kniehebels. Außerdem kann der Hubmechanismus einen oder mehrere Kniehebelmechanismen aufweisen.

In einer weiteren Ausgestaltung der Erfindung weist die Werkstückaufnahmevorrichtung ferner zusätzlich zum Kopplungselement des Hubmechanismus wenigstens einen Aktuator zum Antreiben des wenigstens einen Hubmechanismus auf. Dieser Aktuator weist insbesondere eine Hydraulik, eine Pneumatik und/oder einen Elektromotor auf. Der Aktuator kann wahlweise zusätzlich zum Hubmechanismus vorgesehen oder in den Hubmechanismus integriert sein.

Gegenstand der Erfindung ist auch eine Fördervorrichtung zum Fördern von Werkstücken mit einer Transportvorrichtung und einer oben beschriebenen Werkstückaufnahmevorrichtung der Erfindung zum Tragen wenigstens eines Werkstücks, die entlang der Transportvorrichtung in einer Förderrichtung bewegbar ist, wobei die Transportvorrichtung eine Kulisse aufweist, die mit dem Kopplungselement des wenigstens einen Hubmechanismus der Werkstückaufnahmevorrichtung in Eingriff bringbar ist, um den wenigstens einen Hubmechanismus anzutreiben. Die Kulisse kann den Hubmechanismus der Werkstückaufnahmevorrichtung automatisch aktivieren, wenn die Werkstückaufnahmevorrichtung im Bereich der Kulisse in Förderrichtung bewegt wird.

Die erfindungsgemäße Fördervorrichtung eignet sich insbesondere zur Verwendung in Werkstückbehandlungsanlagen zum Behandeln und/oder Bearbeiten von Werkstücken, insbesondere von Fahrzeugkarosserien. Eine Werkstückbehandlungsanlage ist insbesondere eine Oberflächenbehandlungsanlage, eine Bearbeitungsanlage, eine Beschichtungsanlage, eine Lackieranlage, eine Trocknungsanlage oder eine Reinigungsanlage. Mit Hilfe der erfindungsgemäßen Fördervorrichtung können insbesondere noch nasse und zu trocknende Werkstücke so gefördert werden, dass eine Flüssigkeit von den Werkstücken einfach abfließen kann und die Werkstücke so während ihrer Förderung effizient getrocknet werden können.

Die Transportvorrichtung ist beispielsweise als eine Rollenbahn, ein Rollenförderer, ein Bandförderer und/oder ein Kettenförderer ausgestaltet.

In einer Ausgestaltung der Erfindung weist die Transportvorrichtung einen Aktuator zum Ansteuern des wenigstens einen Steuermechanismus der Werkstückaufnahmevorrichtung, um den wenigstens einen Hubmechanismus zu entriegeln, auf. Dieses Entriegeln kann vorzugsweise im kontinuierlichen Förderbetrieb erfolgen.

### KURZBESCHREIBUNG DER ZEICHNUNGEN

Obige sowie weitere Vorteile, Merkmale und Anwendungsmöglichkeiten der Erfindung werden aus der nachfolgenden Beschreibung von verschiedenen Ausführungsformen anhand der beiliegenden Zeichnungen besser verständlich. Darin zeigen, zum Teil schematisch:

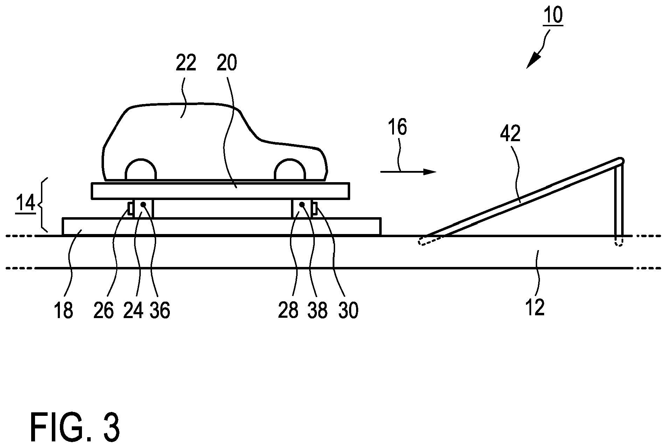

- Fig. 3: eine Fördervorrichtung gemäß einem Ausführungsbeispiel der Erfindung;
- Fig. 1: eine Fördervorrichtung gemäß einer weiteren Ausführungsform, die mit dem Ausführungsbeispiel der Erfindung von Fig. 3 kombinierbar ist;
- Fig. 2: eine Fördervorrichtung gemäß einer alternativen Ausführungsform, die nicht Gegenstand der Erfindung ist;
- Fig. 4: eine Perspektivansicht einer Werkstückaufnahmevorrichtung gemäß einem ersten Ausführungsbeispiel der Erfindung in abgesenkter Betriebsstellung;
- Fig. 5: eine Perspektivansicht der Werkstückaufnahmevorrichtung von Fig. 4 in beidseitiger angehobener Betriebsstellung;
- Fig. 6: eine Perspektivansicht der Werkstückaufnahmevorrichtung von Fig. 4 in hinten angehobener Betriebsstellung;
- Fig. 7: eine Perspektivansicht der Werkstückaufnahmevorrichtung von Fig. 4 in vorne angehobener Betriebsstellung;
- Fig. 8: eine perspektivische Detailansicht eines Hubmechanismus der Werkstückaufnahmevorrichtung von Fig. 4 in abgesenkter Betriebsstellung;
- Fig. 9: eine perspektivische Detailansicht des Hubmechanismus von Fig. 8 in angehobener Betriebsstellung;
- Fig. 10: eine Perspektivansicht einer Werkstückaufnahmevorrichtung gemäß einem zweiten Ausführungsbeispiel der Erfindung in abgesenkter Betriebsstellung;
- Fig. 11: eine Perspektivansicht der Werkstückaufnahmevorrichtung von Fig. 10 in hinten angehobener Betriebsstellung;
- Fig. 12: eine perspektivische Detailansicht eines Hubmechanismus der Werkstückaufnahmevorrichtung von Fig. 10 in abgesenkter Betriebsstellung;
- Fig. 13: eine perspektivische Detailansicht des Hubmechanismus von Fig. 12 in angehobener Betriebsstellung;
- Fig. 14: eine Perspektivansicht einer Werkstückaufnahmevorrichtung gemäß einem dritten Ausführungsbeispiel der Erfindung in abgesenkter Betriebsstellung;
- Fig. 15: eine Perspektivansicht der Werkstückaufnahmevorrichtung von Fig. 14 in hinten angehobener Betriebsstellung;
- Fig. 16: eine perspektivische Detailansicht eines Hubmechanismus der Werkstückaufnahmevorrichtung von Fig. 14 in abgesenkter Betriebsstellung;
- Fig. 17: eine perspektivische Detailansicht des Hubmechanismus von Fig. 16 in angehobener Betriebsstellung;
- Fig. 18: eine Perspektivansicht einer Fördervorrichtung mit Kulisse mit der Werkstückaufnahmevorrichtung von Fig. 4 bis 9 in abgesenkter Betriebsstellung; und
- Fig. 19: eine Perspektivansicht der Fördervorrichtung von Fig. 18 mit der Werkstückaufnahmevorrichtung in hinten angehobener Betriebsstellung.

### DETAILLIERTE BESCHREIBUNG BEVORZUGTER AUSFÜHRUNGSBEISPIELEN

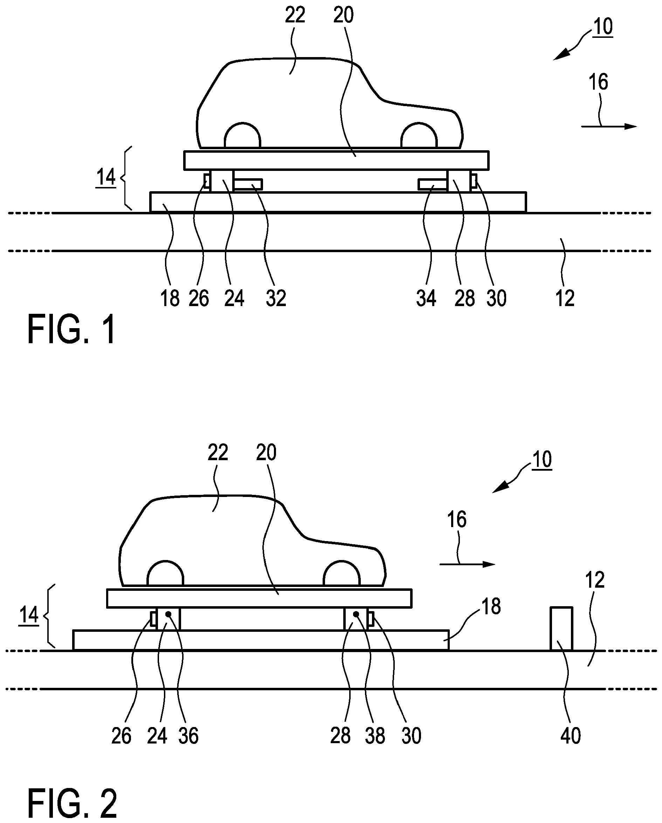

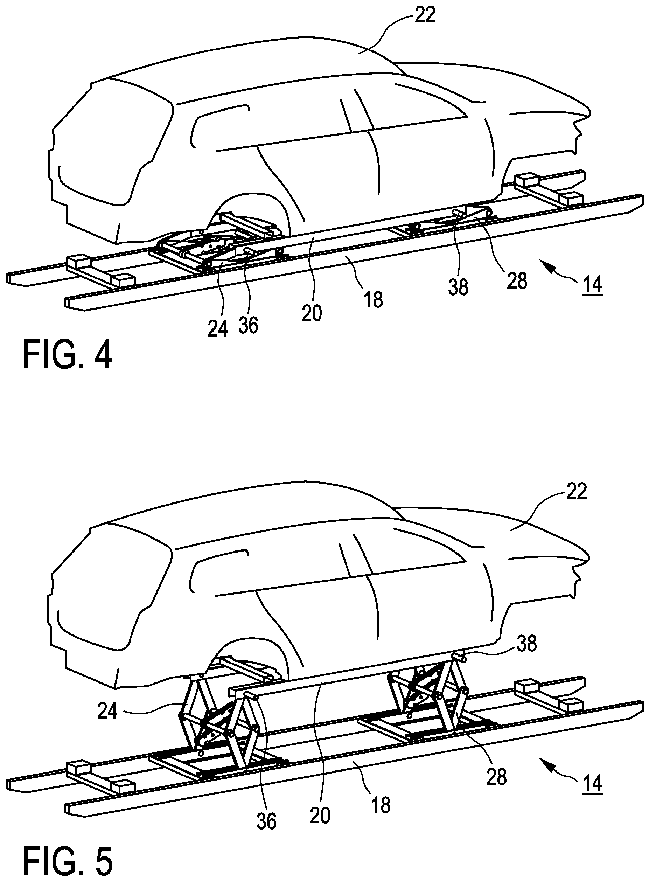

Anhand der Fig. 1 bis 3 wird zunächst das Grundprinzip der Erfindung anhand von drei Ausführungsvarianten erläutert. Anhand der Fig. 4 bis 19 werden anschließend konkrete Ausführungsbeispiele der Werkstückaufnahmevorrichtung und der Transportvorrichtung erläutert.

Fig. 1 zeigt eine Fördervorrichtung 10 für eine Werkstückbehandlungsanlage gemäß einer Ausführungsform, die optional mit dem später unter Bezug auf Fig. 3 beschriebenen Ausführungsbeispiel der Erfindung kombinierbar ist.

Die Fördervorrichtung 10 weist eine Transportvorrichtung 12 zum Beispiel in Form eines Kettenförderers oder Bandförderers und eine Werkstückaufnahmevorrichtung 14 zum Beispiel in der Art eines Skids auf. Die Werkstückaufnahmevorrichtung 14 ist entlang der Transportvorrichtung 12 in einer Förderrichtung 16 bewegbar.

Die Werkstückaufnahmevorrichtung 14 weist eine Basis 18 auf, die entlang der Transportvorrichtung 12 in der Förderrichtung 16 bewegt werden kann. Ferner weist die Werkstückaufnahmevorrichtung 14 einen Werkstückträger 20 zum Tragen eines Werkstücks 22 wie beispielsweise einer Fahrzeugkarosserie auf. Der Werkstückträger 20 ist mit der Basis 18 über einen hinteren Hubmechanismus 24 in einem in Förderrichtung 16 hinteren Bereich der Werkstückaufnahmevorrichtung 14 und einen vorderen Hubmechanismus 28 in einem in Förderrichtung 16 vorderen Bereich der Werkstückaufnahmevorrichtung 14 verbunden. Die beiden Hubmechanismen 24, 28 weisen zum Beispiel jeweils einen Kniehebelmechanismus auf.

Mit Hilfe des hinteren Hubmechanismus 24 kann der in Förderrichtung 16 hintere Bereich des Werkstückträgers 20 gegenüber der Basis 18 angehoben werden, und mit Hilfe des vorderen Hubmechanismus 28 kann der in Förderrichtung 16 vordere Bereich des Werkstückträgers 20 gegenüber der Basis 18 angehoben werden. Dabei funktionieren der hintere und der vordere Hubmechanismus 24, 28 vorzugsweise unabhängig voneinander, sodass der Werkstückträger 20 und damit auch das Werkstück 22 in der Förderrichtung 16 gegenüber der Basis 18 schräg gestellt werden können - wahlweise mit dem vorderen Ende oder dem hinteren Ende nach unten geneigt. Auf diese Weise kann beispielsweise eine Flüssigkeit von dem Werkstück 22 abfließen, sodass das Werkstück 22 während seiner Förderung zum Beispiel effizient getrocknet werden kann. Zudem kann der Werkstückträger 20 bei einer Betätigung von beiden Hubmechanismen 24, 28 auch insgesamt gegenüber der Basis 18 angehoben werden, um das Werkstück 22 beispielsweise in einer für die Bearbeitung idealen Höhe zu positionieren.

Dem hinteren Hubmechanismus 24 ist ein Steuermechanismus 26 zugeordnet. Dieser Steuermechanismus 26 ist derart ausgestaltet, dass er den hinteren Hubmechanismus 24 in seiner angehobenen Betriebsstellung verriegeln kann, um die Schrägstellung des Werkstückträgers 20 zu sichern. Die Verriegelung durch den Steuermechanismus 26 kann zum Beispiel manuell, durch einen Aktuator an der Werkstückaufnahmevorrichtung 14 oder einen Aktuator an der Transportvorrichtung 12 wieder gelöst werden, sodass der Werkstückträger 20 über den hinteren Hubmechanismus 24 wieder in seine abgesenkte Ausgangsstellung abgesenkt werden kann. Der Steuermechanismus 26 ist bevorzugt außerdem derart ausgestaltet, dass er eine Hubbewegung des hinteren Hubmechanismus 24 nach oben und/oder unten begrenzt. Der Steuermechanismus 26 kann in den hinteren Hubmechanismus 24 integriert sein oder als separate Komponente zu diesem ausgebildet sein.

In analoger Weise ist dem vorderen Hubmechanismus 28 ein Steuermechanismus 30 zugeordnet, der ebenfalls derart ausgestaltet ist, dass er den hinteren Hubmechanismus 24 in seiner angehobenen Betriebsstellung verriegeln kann, und bevorzugt außerdem derart ausgestaltet ist, dass er eine Hubbewegung des vorderen Hubmechanismus 24 nach oben und/oder unten begrenzt.

Dem hinteren Hubmechanismus 24 ist ferner ein Aktuator 32 zugeordnet. Dieser Aktuator 32 treibt den hinteren Hubmechanismus 24 an, um den hinteren Bereich des Werkstückträgers 20 anzuheben oder abzusenken. In analoger Weise ist dem vorderen Hubmechanismus 28 ferner ein Aktuator 34 zugeordnet, der den vorderen Hubmechanismus 28 antreibt, um den vorderen Bereich des Werkstückträgers 20 anzuheben oder abzusenken. Die Aktuatoren 32, 34 weisen zu diesem Zweck zum Beispiel eine Hydraulik, eine Pneumatik und/oder einen Elektromotor auf.

In der in Fig. 1 gezeigten Ausführungsvariante sind ein hinterer Hubmechanismus 24 und ein vorderer Hubmechanismus 28 vorgesehen. In anderen Ausführungsvarianten kann auch nur der hintere Hubmechanismus 24 oder nur der vordere Hubmechanismus 28 vorgesehen sein.

Fig. 2 zeigt eine Fördervorrichtung 10 für eine Werkstückbehandlungsanlage gemäß einer alternativen Ausführungsform, die nicht Gegenstand der durch die Ansprüche definierten Erfindung ist. Dabei sind gleiche Komponenten mit den gleichen Bezugsziffern gekennzeichnet wie in der Ausführungsform von Fig.1.

In der Ausführungsform von Fig. 2 enthält die Werkstückaufnahmevorrichtung 14 keine Aktuatoren 32, 34. Stattdessen ist an der Transportvorrichtung 12 an einer vorgegebenen Position ein Aktuator 40 angebracht. Die beiden Hubmechanismen 24, 28 weisen jeweils wenigstens ein Kopplungselement 36, 38 auf, mit dem der Aktuator 40 gekoppelt werden kann, wenn die Werkstückaufnahmevorrichtung 14 auf der Transportvorrichtung 12 zu diesem Aktuator 40 gefördert wird. Die Kopplungselemente 36, 38 können dabei optional zwischen einer Kopplungsstellung und einer Nicht-Kopplungsstellung bewegbar sein. Auch dieser Aktuator 40 kann zum Beispiel eine Hydraulik, eine Pneumatik und/oder einen Elektromotor aufweisen. Da die Hubmechanismen 24, 28 durch die Steuermechanismen 26, 30 in ihren angehobenen Stellungen verriegelt werden, bleibt der Werkstückträger 20 auch nach dem Aktuator 40 in seiner Schrägstellung bzw. seiner insgesamt angehobenen Stellung.

Im Übrigen entspricht die Fördervorrichtung 10 von Fig. 2 jener von Fig. 1.

Fig. 3 zeigt eine Fördervorrichtung 10 für eine Werkstückbehandlungsanlage gemäß einem Ausführungsbeispiel der in den Ansprüchen definierten Erfindung. Dabei sind gleiche Komponenten mit den gleichen Bezugsziffern gekennzeichnet wie in den Ausführungsformen von Fig. 1 und 2.

In dem Ausführungsbeispiel von Fig. 3 enthält die Werkstückaufnahmevorrichtung 14 keine Aktuatoren 32, 34. Stattdessen ist an der Transportvorrichtung 12 an einer vorgegebenen Position eine Kulisse 42 montiert. Die beiden Hubmechanismen 24, 28 weisen jeweils wenigstens ein Kopplungselement 36, 38 auf, das mit der Kulisse 42 in Eingriff gelangen kann, wenn die Werkstückaufnahmevorrichtung 14 auf der Transportvorrichtung 12 entlang dieser Kulisse 42 gefördert wird. Wenn die Werkstückaufnahmevorrichtung 14 entlang der Kulisse 42 bewegt wird, werden das Kopplungselement 36, 38 und damit auch der Hubmechanismus 24, 28 automatisch angehoben. Da die Hubmechanismen 24, 28 durch die Steuermechanismen 26, 30 in ihren angehobenen Stellungen verriegelt werden, bleibt der Werkstückträger 20 auch nach Verlassen der Kulisse 42 in seiner Schrägstellung bzw. seiner insgesamt angehobenen Stellung. Die Kopplungselemente 36, 38 können optional zwischen einer Kopplungsstellung und einer Nicht-Kopplungsstellung bewegbar sein.

Im Übrigen entspricht die Fördervorrichtung 10 von Fig. 3 jenen von Fig. 1 und Fig. 2.

Fig. 4 bis 9 zeigen eine Werkstückaufnahmevorrichtung 14 gemäß einem ersten Ausführungsbeispiel. Die Werkstückaufnahmevorrichtung 14 ist für alle Ausführungsformen der Fördervorrichtung 10 von Fig. 1 bis 3 geeignet.

Die Werkstückaufnahmevorrichtung 14 dieses Ausführungsbeispiels ist in der Art eines Skids ausgebildet. Sie weist einen hinteren Hubmechanismus 24 und einen vorderen Hubmechanismus 28 auf, sodass das Werkstück 22 in Förderrichtung 16 wahlweise nach vorne oder nach hinten geneigt werden kann oder insgesamt angehoben werden kann.

Die beiden Hubmechanismen 24, 28 weisen jeweils einen Kniehebelmechanismus mit zwei Kniehebelpaaren auf. Das in Förderrichtung 16 linke und rechte Kniehebelpaar sind dabei über zwei Querstangen miteinander verbunden, die quer zur Förderrichtung 16 verlaufen und in Förderrichtung 16 hintereinander angeordnet sind. Die beiden Querstangen sind ihrerseits über ein Gelenk miteinander verbunden, welches den Steuermechanismus 26, 30 mit der Verriegelungsfunktion und der Hubbegrenzungsfunktion bildet.

Fig. 4 zeigt die Werkstückaufnahmevorrichtung 14 mit den beiden Hubmechanismen 24, 28 jeweils in ihrer abgesenkten Ausgangsstellung, sodass der Werkstückträger 20 im Wesentlichen parallel zur Basis 18 ausgerichtet ist und mit geringem Abstand zur Basis 18 angeordnet ist. Fig. 5 zeigt die Werkstückaufnahmevorrichtung 14 mit den beiden Hubmechanismen 24, 28 jeweils in ihrer angehobenen Stellung, sodass der Werkstückträger 20 im Wesentlichen parallel zur Basis 18 ausgerichtet und mit größerem Abstand zur Basis 18 angeordnet ist.

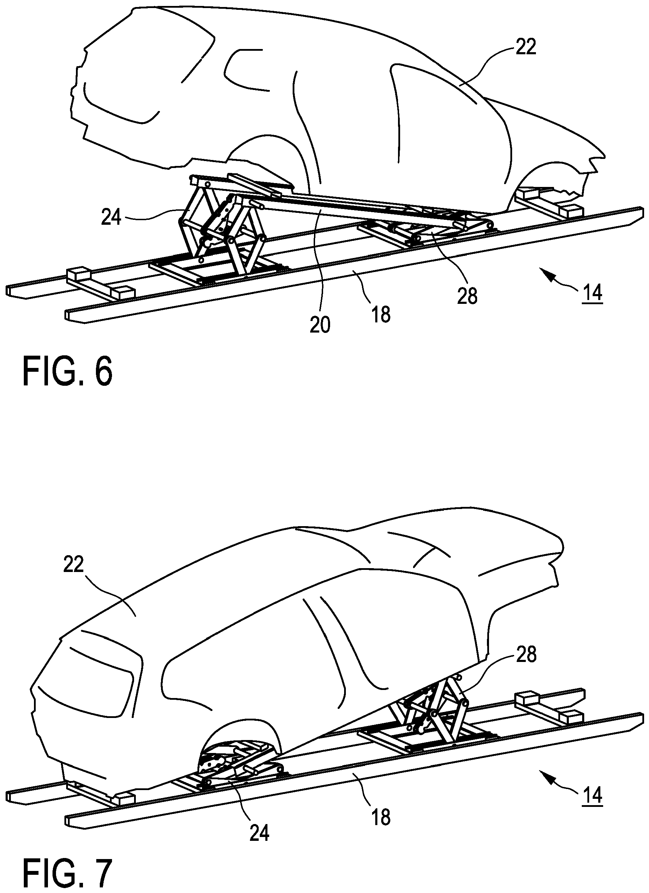

In der Darstellung von Fig. 6 ist der Werkstückträger 20 in Förderrichtung 16 vorne nach unten geneigt, indem sich der vordere Hubmechanismus 28 in seiner abgesenkten Ausgangsstellung befindet und der hintere Hubmechanismus 24 angehoben ist. In der Darstellung von Fig. 7 ist der Werkstückträger 20 in Förderrichtung 16 hinten nach unten geneigt, indem sich der hintere Hubmechanismus 24 in seiner abgesenkten Ausgangsstellung befindet und der vordere Hubmechanismus 28 angehoben ist.

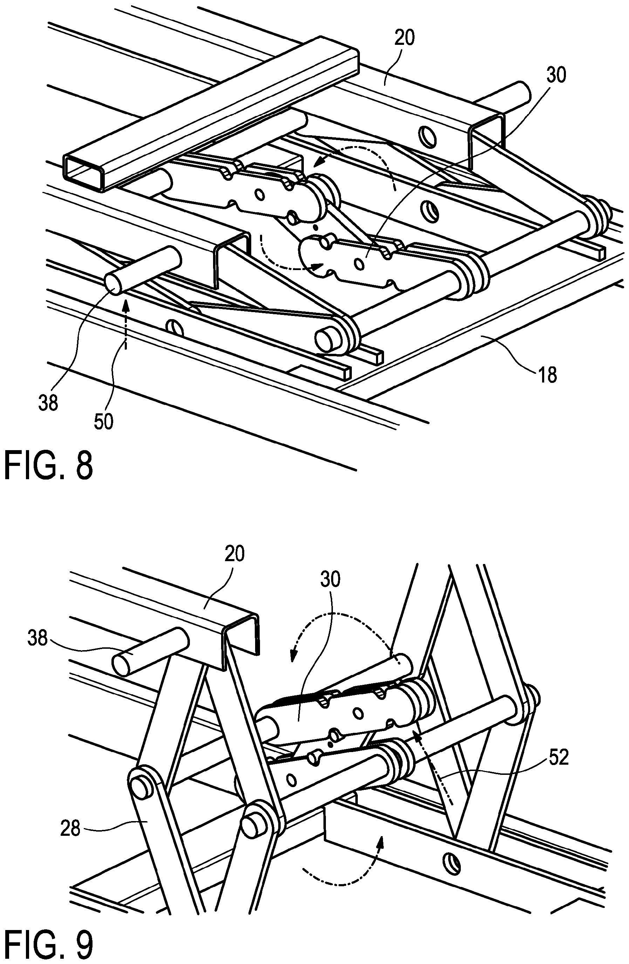

Fig. 8 und 9 zeigen in mehr Einzelheiten die Konstruktion der Hubmechanismen hier am Beispiel des vorderen Hubmechanismus 28. Dabei zeigt Fig. 8 den Hubmechanismus 28 in seiner abgesenkten Ausgangsstellung, während Fig. 9 den Hubmechanismus 28 in seiner angehobenen Stellung zeigt. Um den Hubmechanismus 28 anzuheben, drückt zum Beispiel ein Aktuator 34, 40 oder eine Kulisse 42 die Kopplungselemente 38 zu beiden Seiten des Hubmechanismus 28 nach oben (Pfeil 50 in Fig. 8). Um die durch den Steuermechanismus 30 automatisch bewirkte Verriegelung des Hubmechanismus 28 in seiner angehobenen Stellung wieder zu lösen, wirkt ein Aktuator auf den Steuermechanismus 30 in der Mitte des Hubmechanismus 28 (Pfeil 52 in Fig. 9). In Fig. 8 ist zudem die Hubbegrenzung des Hubmechanismus 28 nach unten durch das gegenseitige Verhaken der Hebelabschnitte des gelenkartigen Steuermechanismus 30 zu erkennen.

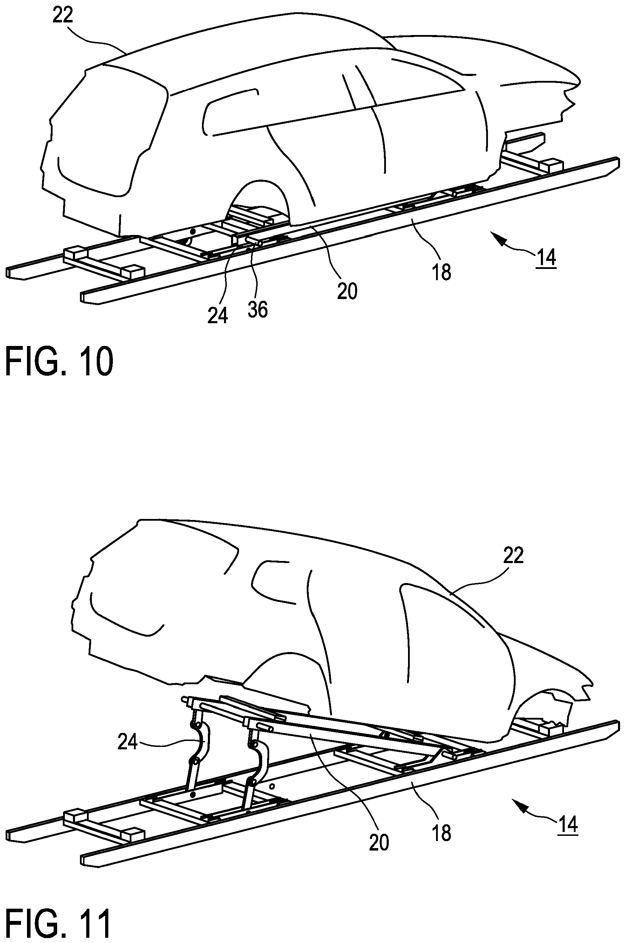

Fig. 10 bis 13 zeigen eine Werkstückaufnahmevorrichtung 14 gemäß einem zweiten Ausführungsbeispiel. Die Werkstückaufnahmevorrichtung 14 ist für alle Ausführungsformen der Fördervorrichtung 10 von Fig. 1 bis 3 geeignet.

Die Werkstückaufnahmevorrichtung 14 dieses Ausführungsbeispiels ist ebenfalls in der Art eines Skids ausgebildet. Sie weist einen hinteren Hubmechanismus 24, aber keinen vorderen Hubmechanismus 28 auf, sodass das Werkstück 22 nur in Förderrichtung 16 nach vorne geneigt werden kann.

Der hintere Hubmechanismus 24 weist einen Kniehebelmechanismus mit zwei Kniehebeln in Förderrichtung 16 links bzw. rechts auf. Der Steuermechanismus 26 mit der Verriegelungsfunktion ist hier durch die Form der Hebelabschnitte und deren Verbindungen ausgebildet und somit in den Hubmechanismus 24 integriert.

Fig. 10 zeigt die Werkstückaufnahmevorrichtung 14 mit dem hinteren Hubmechanismus 24 in seiner abgesenkten Ausgangsstellung, sodass der Werkstückträger 20 im Wesentlichen parallel zur Basis 18 ausgerichtet ist und mit geringem Abstand zur Basis 18 angeordnet ist. In der Darstellung von Fig. 11 ist der Werkstückträger 20 in Förderrichtung 16 vorne nach unten geneigt, indem der hintere Hubmechanismus 24 angehoben ist.

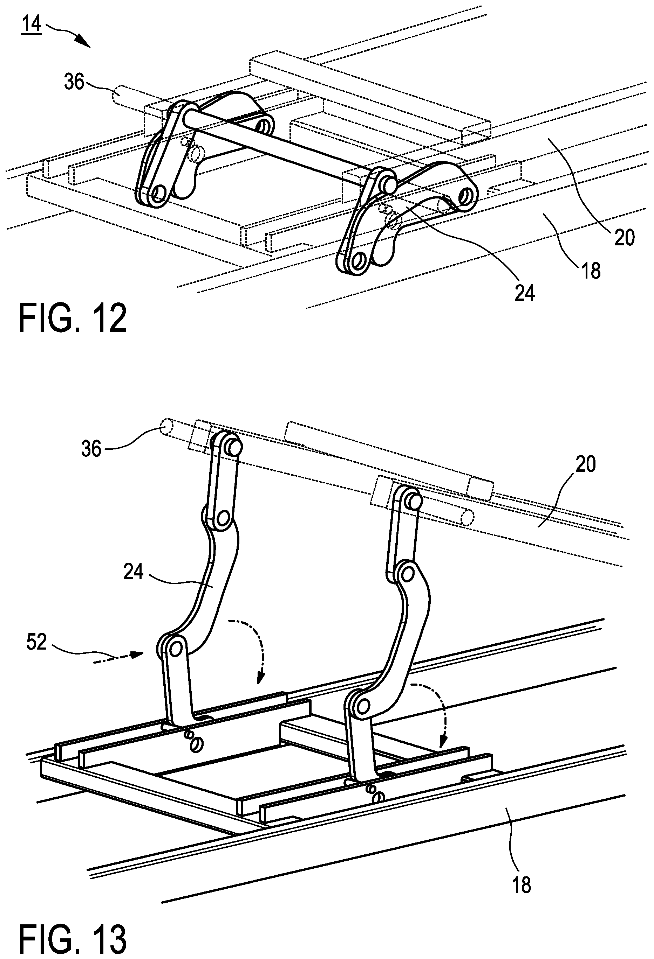

Fig. 12 und 13 zeigen in mehr Einzelheiten die Konstruktion des hinteren Hubmechanismus 24. Dabei zeigt Fig. 12 den Hubmechanismus 24 in seiner abgesenkten Ausgangsstellung, während Fig. 13 den Hubmechanismus 24 in seiner angehobenen Stellung zeigt. Um den Hubmechanismus 24 anzuheben, drückt zum Beispiel ein Aktuator 34, 40 oder eine Kulisse 42 die Kopplungselemente 36 zu beiden Seiten des Hubmechanismus 24 nach oben. Um die durch die Konstruktion des Kniehebelmechanismus mit integriertem Steuermechanismus 26 automatisch bewirkte Verriegelung des Hubmechanismus 24 in seiner angehobenen Stellung wieder zu lösen, wirkt ein Aktuator auf die untere Gelenkverbindung des Kniehebelmechanismus (Pfeil 52 in Fig. 13). Die Hubbegrenzung des Hubmechanismus 24 nach oben ist durch die Länge der Hebelabschnitte der Kniehebel vorgegeben.

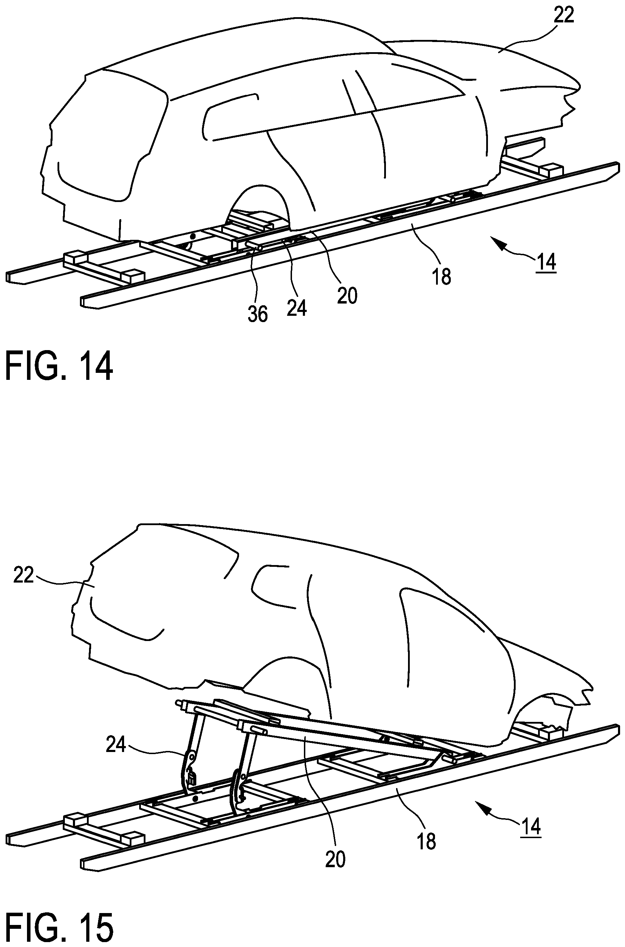

Fig. 14 bis 17 zeigen eine Werkstückaufnahmevorrichtung 14 gemäß einem dritten Ausführungsbeispiel. Die Werkstückaufnahmevorrichtung 14 ist für alle Ausführungsformen der Fördervorrichtung 10 von Fig. 1 bis 3 geeignet.

Die Werkstückaufnahmevorrichtung 14 dieses Ausführungsbeispiels ist ebenfalls in der Art eines Skids ausgebildet. Sie weist einen hinteren Hubmechanismus 24, aber keinen vorderen Hubmechanismus 28 auf, sodass das Werkstück 22 nur in Förderrichtung 16 nach vorne geneigt werden kann.

Der hintere Hubmechanismus 24 weist einen Kniehebelmechanismus mit zwei Kniehebeln in Förderrichtung 16 links bzw. rechts auf. Der Steuermechanismus 26 mit der Verriegelungsfunktion ist hier wieder durch die Form der Hebelabschnitte und deren Gelenkverbindungen ausgebildet und somit in den Hubmechanismus 24 integriert.

Fig. 14 zeigt die Werkstückaufnahmevorrichtung 14 mit dem hinteren Hubmechanismus 24 in seiner abgesenkten Ausgangsstellung, sodass der Werkstückträger 20 im Wesentlichen parallel zur Basis 18 ausgerichtet ist und mit geringem Abstand zur Basis 18 angeordnet ist. In der Darstellung von Fig. 15 ist der Werkstückträger 20 in Förderrichtung 16 vorne nach unten geneigt, indem der hintere Hubmechanismus 24 angehoben ist.

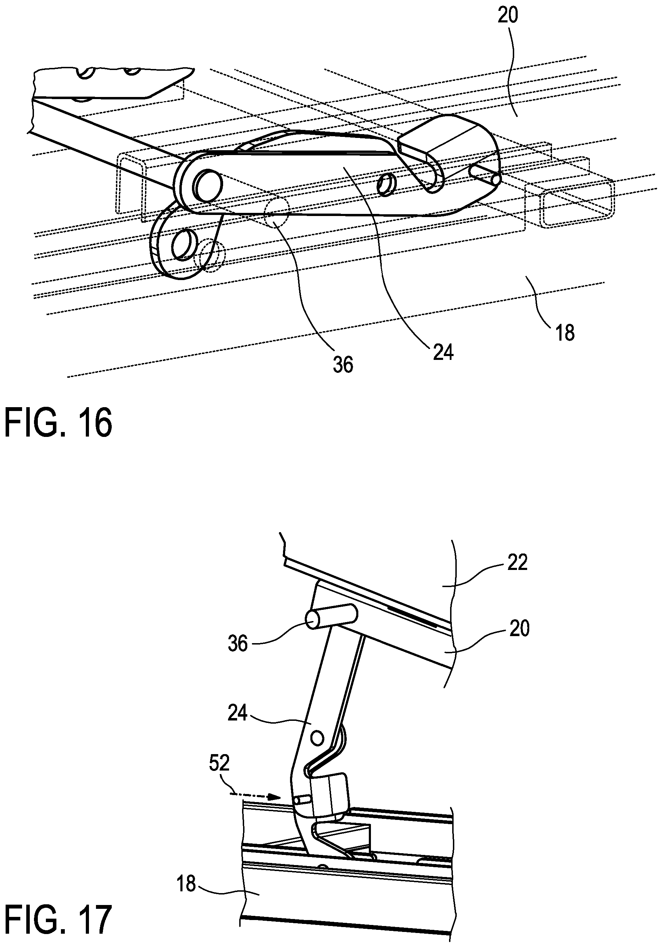

Fig. 16 und 17 zeigen in mehr Einzelheiten die Konstruktion des hinteren Hubmechanismus 24. Dabei zeigt Fig. 16 den Hubmechanismus 24 in seiner abgesenkten Ausgangsstellung, während Fig. 13 den Hubmechanismus 24 in seiner angehobenen Stellung zeigt. Um den Hubmechanismus 24 anzuheben, drückt zum Beispiel ein Aktuator 34, 40 oder eine Kulisse 42 die Kopplungselemente 36 zu beiden Seiten des Hubmechanismus 24 nach oben. Um die durch die Konstruktion des Kniehebelmechanismus mit integriertem Steuermechanismus 26 automatisch bewirkte Verriegelung des Hubmechanismus 24 in seiner angehobenen Stellung wieder zu lösen, wirkt ein Aktuator auf die untere Sperrklinke des Kniehebelmechanismus (Pfeil 52 in Fig. 17), wobei ein kurzer Impuls ausreichend ist. Die Hubbegrenzung des Hubmechanismus 24 nach oben ist auch in diesem Ausführungsbeispiel durch die Länge der Hebelabschnitte der Kniehebel vorgegeben.

Als weitere Ausführungsbeispiele der Werkstückaufnahmevorrichtung 14 können die drei Ausführungsbeispiele der Fig. 4 bis 17 auch vielfältig miteinander kombiniert werden. So kann der im ersten Ausführungsbeispiel der Fig. 4 bis 9 verwendete Kniehebelmechanismus auch für die Hubmechanismen der beiden anderen Ausführungsbeispiele verwendet werden; kann der im zweiten Ausführungsbeispiel der Fig. 10 bis 13 verwendete Kniehebelmechanismus auch für die Hubmechanismen der beiden anderen Ausführungsbeispiele verwendet werden; und kann der im dritten Ausführungsbeispiel der Fig. 14 bis 17 verwendete Kniehebelmechanismus auch für die Hubmechanismen der beiden anderen Ausführungsbeispiele verwendet werden. Das erste Ausführungsbeispiel der Fig. 4 bis 9 kann auch derart modifiziert werden, dass der vordere und der hintere Hubmechanismus 24, 28 unterschiedliche Kniehebelmechanismen haben.

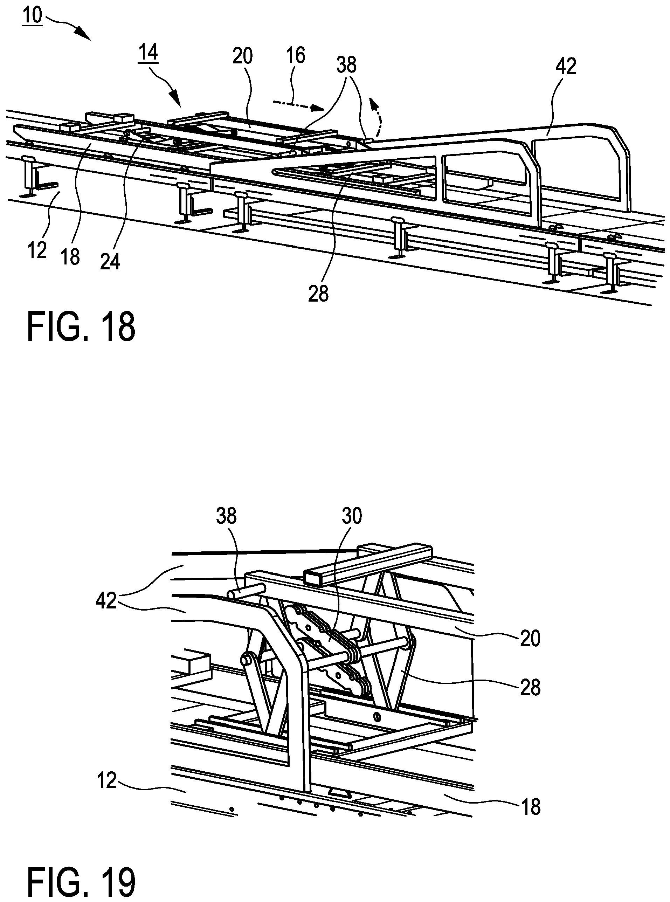

Fig. 18 und 19 zeigen ein Ausführungsbeispiel einer Fördervorrichtung 10 nach der erfindungsgemäßen Ausführungsvariante gemäß Fig. 3.

Fig. 18 zeigt das Anfangsstadium des Anhebeprozesses des Werkstückträgers 20 der Werkstückaufnahmevorrichtung 14 durch die Kulisse 42 der Transportvorrichtung 12. Die Werkstückaufnahmevorrichtung 14 wird in Förderrichtung 16 gefördert bis die Kopplungselemente 38 des (hier vorderen) Hubmechanismus 28 mit der Kulisse 42 in Eingriff gelangen. Wird die Werkstückaufnahmevorrichtung 14 dann weiter in Förderrichtung 16 bewegt, so werden die Kopplungselemente 38 durch die Kulisse nach und nach aufwärts gedrückt. Am in Förderrichtung 16 vorderen Ende der entsprechend dimensionierten Kulisse hat der Hubmechanismus 28 seine angehobene Betriebsstellung erreicht. Aufgrund der Verriegelungsfunktion des Steuermechanismus 30 bleibt der vordere Hubmechanismus 28 in dieser angehobenen Betriebsstellung auch nach der Kulisse 42 und ohne Anheben der Kopplungselemente 38 durch die Kulisse 42.

### BEZUGSZIFFERNLISTE

- 10: Fördervorrichtung
- 12: Transportvorrichtung
- 14: Werkstückaufnahmevorrichtung
- 16: Förderrichtung
- 18: Basis
- 20: Werkstückträger
- 22: Werkstück
- 24: hinterer Hubmechanismus
- 26: Steuermechanismus
- 28: vorderer Hubmechanismus
- 30: Steuermechanismus
- 32: Aktuator
- 34: Aktuator
- 36: Kopplungselement
- 38: Kopplungselement
- 40: Aktuator an Transportvorrichtung
- 42: Kulisse an Transportvorrichtung
- 50: Anheben
- 52: Entriegeln

## Patentansprüche

1. Werkstückaufnahmevorrichtung (14) zum Fördern von Werkstücken (22), insbesondere zum Fördern von Fahrzeugkarosserien, aufweisend:
eine Basis (18), die ausgestaltet ist, um auf einem Untergrund oder entlang einer Transportvorrichtung (12) einer Fördervorrichtung (10) in einer Förderrichtung (16) bewegt zu werden; und
einen Werkstückträger (20) zum Tragen wenigstens eines Werkstücks (22), der auf der Basis (18) montiert ist,
**dadurch gekennzeichnet, dass**
wenigstens ein Hubmechanismus (24, 28) vorgesehen ist, um einen in Förderrichtung (16) hinteren Bereich und/oder einen in Förderrichtung (16) vorderen Bereich des Werkstückträgers (20) relativ zur Basis (18) anzuheben oder
abzusenken, wobei der wenigstens eine Hubmechanismus (24, 28) ein Kopplungselement (36, 38) aufweist, das mit einer externen Kulisse (42) der Transportvorrichtung (12) koppelbar ist, um den wenigstens einen Hubmechanismus (24, 28) anzutreiben.

2. Werkstückaufnahmevorrichtung nach Anspruch 1, ferner aufweisend:
wenigstens einen Steuermechanismus (26, 30), der ausgestaltet ist, um den wenigstens einen Hubmechanismus (24, 28) in einer Betriebsstellung zu verriegeln, in welcher der Bereich des Werkstückträgers (20) relativ zur Basis (18) angehoben oder abgesenkt ist.

3. Werkstückaufnahmevorrichtung nach Anspruch 2, ferner aufweisend:
wenigstens einen Aktuator zum Ansteuern des wenigstens einen Steuermechanismus (26, 30), um den wenigstens einen Hubmechanismus (24, 28) zu entriegeln.

4. Werkstückaufnahmevorrichtung nach einem der vorhergehenden Ansprüche, ferner aufweisend: wenigstens einen Steuermechanismus (26, 30), der ausgestaltet ist, um eine Hubbewegung des wenigstens einen Hubmechanismus (24, 28) in einer den Bereich des Werkstückträgers (20) relativ zur Basis (18) anhebenden Richtung und/oder in einer den Bereich des Werkstückträgers (20) relativ zur Basis (18) absenkenden Richtung zu begrenzen.

5. Werkstückaufnahmevorrichtung nach einem der vorhergehenden Ansprüche, bei welcher der wenigstens eine Hubmechanismus (24, 28) einen Kniehebelmechanismus aufweist.

6. Werkstückaufnahmevorrichtung nach einem der vorhergehenden Ansprüche, ferner aufweisend: wenigstens einen Aktuator (32, 34), der ausgestaltet ist, um den wenigstens einen Hubmechanismus (24, 28) anzutreiben.

7. Werkstückaufnahmevorrichtung nach einem der vorhergehenden Ansprüche, welche einen einzigen Werkstückträger (20) zum Tragen wenigstens eines Werkstücks aufweist, wobei der eine Werkstückträger (20) über einen hinteren Hubmechanismus (24) in einem in der Förderrichtung (16) hinteren Bereich der Werkstückaufnahmevorrichtung (14) und/oder einen vorderen Hubmechanismus (28) in einem in der Förderrichtung (16) vorderen Bereich der Werkstückaufnahmevorrichtung (14) mit der Basis (18) verbunden ist.

8. Fördervorrichtung (10) zum Fördern von Werkstücken (22), insbesondere zum Fördern von Fahrzeugkarosserien, aufweisend:
eine Transportvorrichtung (12); und
eine Werkstückaufnahmevorrichtung (14) zum Tragen wenigstens eines Werkstücks (22), die entlang der Transportvorrichtung (12) in einer Förderrichtung (16) bewegbar ist, wobei die Werkstückaufnahmevorrichtung nach einem der vorhergehenden Ansprüche ausgestaltet ist,
wobei die Transportvorrichtung (12) eine Kulisse (42) aufweist, die mit dem Kopplungselement (36, 38) des wenigstens einen Hubmechanismus (24, 28) der Werkstückaufnahmevorrichtung (14) in Eingriff bringbar ist, um den wenigstens einen Hubmechanismus (24, 28) anzutreiben.

9. Fördervorrichtung nach Anspruch 8, bei welcher die Transportvorrichtung (12) einen Aktuator zum Ansteuern des wenigstens einen Steuermechanismus (26, 30) der Werkstückaufnahmevorrichtung (14), um den wenigstens einen Hubmechanismus (24, 28) zu entriegeln, aufweist.

## Claims

1. A workpiece receiving device (14) for conveying workpieces (22), in particular for conveying vehicle bodies, comprising:
a base (18) configured to be moved on a substrate or along a transport apparatus (12) of a conveying equipment (10) in a conveying direction (16); and
a workpiece carrier (20) for carrying at least one workpiece (22), which is mounted on the base (18),
**characterized in that**
at least one lifting mechanism (24, 28) is provided to raise or lower a rear area in the conveying direction (16) and/or a front area in the conveying direction (16) of the workpiece carrier (20) relative to the base (18), wherein the at least one lifting mechanism (24, 28) comprises a coupling element (36, 38) being couplable to an external link (42) of the transport apparatus (12) in order to drive the at least one lifting mechanism (24, 28).

2. The workpiece receiving device according to claim 1, further comprising:
at least one control mechanism (26, 30) configured to lock the at least one lifting mechanism (24, 28) in an operative position in which the region of the workpiece carrier (20) is raised or lowered relative to the base (18).

3. The workpiece receiving device according to claim 2, further comprising:
at least one actuator for controlling the at least one control mechanism (26, 30) in order to unlock the at least one lifting mechanism (24, 28).

4. The workpiece receiving device according to any of the preceding claims, further comprising: at least one control mechanism (26, 30) configured to limit a lifting movement of the at least one lifting mechanism (24, 28) in a direction raising the area of the workpiece carrier (20) relative to the base (18) and/or in a direction lowering the area of the workpiece carrier (20) relative to the base (18).

5. The Workpiece receiving device according to any of the preceding claims, wherein the at least one lifting mechanism (24, 28) comprises a toggle lever mechanism.

6. The workpiece receiving device according to any of the preceding claims, further comprising: at least one actuator (32, 34) configured to drive the at least one lifting mechanism (24, 28).

7. The workpiece receiving device according to any of the preceding claims, which comprises a single workpiece carrier (20) for carrying at least one workpiece, wherein the one workpiece carrier (20) is connected to the base (18) via a rear lifting mechanism (24) in a rear area in the conveying direction (16) of the workpiece receiving device (14) and/or a front lifting mechanism (28) in a front area in the conveying direction of the workpiece receiving device (14).

8. A conveying equipment (10) for conveying workpieces (22), in particular for conveying vehicle bodies, comprising:
a transport apparatus (12); and
a workpiece receiving device (14) for carrying at least one work piece (22), which is movable along the transport apparatus (12) in a conveying direction (16), wherein
the workpiece receiving device is configured according to any of the preceding claims,
wherein the transport apparatus (12) comprises an external link (42) which can be brought into engagement with the coupling element (36, 38) of the at least one lifting mechanism (24, 28) of the workpiece receiving device (14) in order to drive the at least one lifting mechanism (24, 28).

9. The conveying device according to claim 8, wherein the transport apparatus (12) comprises an actuator for controlling the at least one control mechanism (26, 30) of the workpiece receiving device (14) in order to unlock the at least one lifting mechanism (24, 28).

## Revendications

1. Dispositif de réception de pièces (14) servant à convoyer des pièces (22), en particulier servant à convoyer des carrosseries de véhicules, comprenant :
un socle (18) qui est configuré pour se déplacer sur un sol ou le long d'un dispositif de transport (12) d'un dispositif de convoyage (10) dans une direction de convoyage (16) ; et
un support de pièce (20) servant à supporter au moins une pièce (22), lequel est monté sur le socle (18),
**caractérisé en ce que** :
au moins un mécanisme de levage (24, 28) est prévu pour relever ou abaisser, par rapport au socle (18), une zone arrière dans la direction de convoyage (16) et/ou une zone frontale dans la direction de convoyage (16), dans lequel ledit au moins un mécanisme de levage (24, 28) comprend un élément de couplage (36, 38) qui peut être couplé avec un élément de liaison externe (42) du dispositif de transport (12) afin d'entraîner ledit au moins un mécanisme de levage (24, 28).

2. Dispositif de réception de pièces selon la revendication 1, comprenant en outre :
au moins un mécanisme de commande (26, 30) qui est configuré pour verrouiller ledit au moins un mécanisme de levage (24, 28) dans une position de fonctionnement dans laquelle la zone du support de pièce (20) est relevée ou abaissée par rapport au socle (18).

3. Dispositif de réception de pièces selon la revendication 2, comprenant en outre : au moins un actionneur pour commander ledit au moins un mécanisme de commande (26, 30) afin de déverrouiller ledit au moins un mécanisme de levage (24, 28).

4. Dispositif de réception de pièces selon l'une des revendications précédentes, comprenant en outre : au moins un mécanisme de commande (26, 30) qui est configuré pour limiter un mouvement de levage dudit au moins un mécanisme de levage (24, 28), dans une direction de levage de la zone du support de pièce (20) par rapport à la base (18) et/ou dans une direction d'abaissement de la zone du support de pièce (20) par rapport à la base (18).

5. Dispositif de réception de pièces selon l'une des revendications précédentes, dans lequel ledit au moins un mécanisme de levage (24, 28) comprend un mécanisme à genouillère.

6. Dispositif de réception de pièces selon l'une des revendications précédentes, comprenant en outre : au moins un actionneur (32, 34) qui est configuré pour entraîner ledit au moins un mécanisme de levage (24, 28).

7. Dispositif de réception de pièces selon l'une des revendications précédentes, lequel comprend un unique support de pièce (20) servant à supporter au moins une pièce, dans lequel l'unique support de pièce (20) est relié au socle (18), via un mécanisme de levage arrière (24) dans une zone arrière dans la direction de convoyage (16) du dispositif de réception de pièces (14) et/ou via un mécanisme de levage frontal (28) dans une zone frontale dans la direction de convoyage (16) du dispositif de réception de pièces (14).

8. Dispositif de convoyage (10) pour convoyer des pièces (22), en particulier pour convoyer des carrosseries de véhicules, comprenant :
un dispositif de transport (12); et
un dispositif de réception de pièces (14) servant à supporter au moins une pièce (22), qui peut se déplacer le long du dispositif de transport (12) dans une direction de convoyage (16), dans lequel le dispositif de réception de pièces est configuré selon l'une des revendications précédentes,
dans lequel le dispositif de transport (12) comprend un élément de liaison externe (42) qui peut être mis en prise avec l'élément de couplage (36, 38) dudit au moins un mécanisme de levage (24, 28) du dispositif de réception de pièces (14) afin d'entraîner ledit au moins un mécanisme de levage (24, 28).

9. Dispositif de convoyage selon la revendication 8, dans lequel le dispositif de transport (12) comprend un actionneur servant à commander ledit au moins un mécanisme de commande (26, 30) du dispositif de réception de pièces (14) afin de déverrouiller ledit au moins un mécanisme de levage (24, 28).
